(19) Europäisches Patentamt
European Patent Office
Office européen des brevets

(11) Publication number: **0 190 557 B1**

(12) **EUROPEAN PATENT SPECIFICATION**

(45) Date of publication of patent specification: **09.10.91**

(51) Int. Cl.⁵: **H05B 3/14**, H01B 1/06, F01N 3/02

(21) Application number: **86100182.4**

(22) Date of filing: **08.01.86**

(54) Ceramic heater.

(30) Priority: **11.01.85 JP 3459/85**

(43) Date of publication of application:
**13.08.86 Bulletin 86/33**

(45) Publication of the grant of the patent:
**09.10.91 Bulletin 91/41**

(84) Designated Contracting States:
**DE FR GB IT**

(56) References cited:
**EP-A- 0 095 720**
**EP-A- 0 107 511**
**FR-A- 2 515 914**
**US-A- 3 681 737**

(73) Proprietor: **NIPPONDENSO CO., LTD.**
**1-1, Showa-cho**
**Kariya-shi Aichi-ken(JP)**

(72) Inventor: **Hoshizaki, Hiroki**
**8-14, Sokudorinakanokiri Sato-machi**
**Anjo-shi Aichi-ken(JP)**
Inventor: **Kawahara, Nobuaki**
**6-1, Nakayamabata Sato-machi**
**Anjo-shi Aichi-ken(JP)**
Inventor: **Suzuki, Hirofumi**
**6-30, Tennou-cho**
**Kariya-shi Aichi-ken(JP)**
Inventor: **Oyobe, Kazuo**
**1-5, Nadaka Yokone-cho**
**Ohbu-shi Aichi-ken(JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an improvement of a ceramic heater and particularly it is applied to a heater for the regeneration of an apparatus for collecting and purifying fine particles contained in the exhaust gas of a diesel engine or the like.

For collecting and purifying fine particles contained in the exhaust gas, it has been proposed to use a heat-resistant honeycomb- or foam-like filter made of a ceramic material and fire and burn the collected fine particles by means of a heat-resistant ceramic heater disposed on an upper surface of the said filter to regenerate the latter. In this case, from the standpoint of easiness of handling of electrodes, prevention of heater breakage, protection of electrode portions and unification of the heater shape, it has been considered desirable to dispose a plurality of plate-like heaters formed in the shape of U (e.g. EP-A1-0 107 511, EP-A2-0 095 720) or V.

From US-A-3 681 737 a Q-shaped heater is known, on which the preamble of the claim 1 is based.

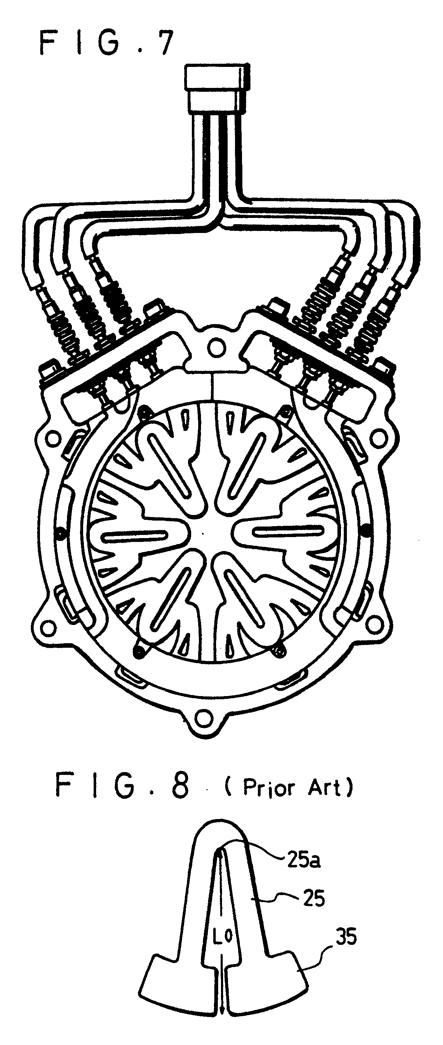

Usually, a U- or v- or Q-shaped heater is connected at its both end electrode portions 35 to metallic lead wires for example as shown in Fig.8 and is thereby charged electrically and heated, so with a view to protecting the electrode portions the sectional area of the electrode portions is made fairly larger than that of a heat generating portion to suppress the heat generation at the electrode portions.

However, in such a ceramic heater there arises an opening/closing motion of leg portions 25 in the course of heat generation and cooling due to thermal expansion, and once the heater is fixed to a holding portion, the above motion is impeded by friction, for example, and stress is concentrated on a bent portion 25a. This stress concentration of the bent portion 25a is proportional to a moment of an external force exerted on the leg portion 25 and a length (Lo) from the leg portion 25 to the bent portion 25a. Consequently, this shape causes the problem that stress is concentrated on the bent portion 25a and a repeated supply of electricity results in crack of the bent portion.

The above described ceramic heater also involves the problem that when it is disposed on the filter surface, it is impossible to heat the filter surface widely because the area of heat generation is small in comparison with the large space of the electrode portions.

The invention is based on the object of further developping the generic ceramic heater in a way that fracturing of the heater due to heat expansion is prevented.

According to the invention this object is solved by the features indicated in the characterizing portion of the claim 1.

The ceramic heater of the present invention is a cantileverable ceramic heater in which two electrode portions are provided on a single straight or curved line and a heat generating portion is positioned on one side of the line.

The above heat generating portion comprises a closed loop portion and two leg portions integrally connected to the closed loop portion at two connecting portions which approximately bisect the closed loop portion. The two electrode portions are each provided at fore ends of the two leg portions respectively.

This ceramic heater is characterized by having a construction in which the closed loop portion and the two electrode portions conjointly form a triangle.

In this ceramic heater, the two electrode portions may be opposing to each other and the closed loop portion may be disposed above a line between the two electrode portions.

In this ceramic heater, moreover, the ring-like portion may have a holding projection portion integrally connected to its electrode-side portion. In this case, there can be attained not only the above object but also another object that a vibration concentration on the electrode portions is to be avoided by changing the heater holding position to thereby reduce cracking or separation at the electrode portions.

BRIEF DESCRIPTION OF THE DRAWINGS

The exact nature of this invention, as well as other objects and advantages thereof, will be readily apparent from consideration of the following specification relating to the annexed drawings in which,

Fig.1 is a plan view of a ceramic heater embodying the invention,

Fig.2 is a plan view of a ceramic heater according to Embodiment 1,

Fig.3 is a plan view of a ceramic heater having a closed loop portion of a true roundness,

Fig.4 is a plan view of a ceramic heater having a rectangular closed loop portion,

Fig.5 is a plan view of a ceramic heater according to Embodiment 2, having a holding projection portion integrally connected an electrode-side portion of a closed loop portion,

Fig.6 is a partially sectional view of a ceramic heater having a metallized layer on the surface thereof and a metal electrode disposed on the surface of the metallized layer,

Fig.7 is a plan view of a heating apparatus constituted by the combination of six ceramic heaters, and
Fig.8 is a plan view of a conventional V-shaped ceramic heater.

DETAILED DESCRIPTION OF THE INVENTION

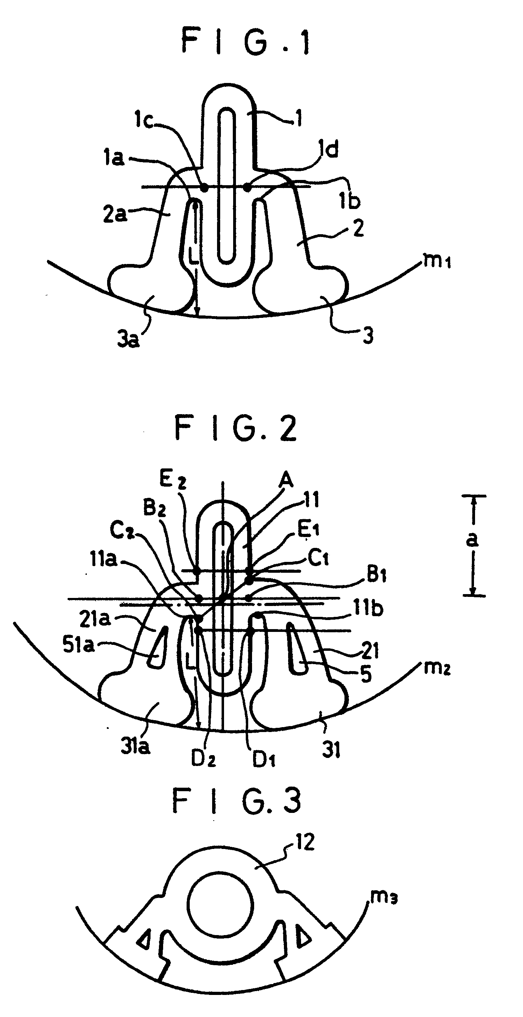

The ceramic heater of the present invention is, for example, as shown in Fig.1 in which two electrode portions 3 and 3a are provided on a single straight or curved line $m_1$ and a heat generating portion is positioned on one side of the line $m_1$. The heat generating portion comprises a closed loop portion 1 and two leg portions 2 and 2a which are integrally connected to the closed loop portion 1 at two connecting portions 1c and 1d. An imaginary line drawn between the connecting portions 1c and 1d approximately bisect the closed loop portion. 1. The electrode portions 3 and 3a are provided at fore ends of the leg portions 2 and 2a, respectively. The closed loop portion 1 and the two electrode portions 3, 3a constitute a triangle.

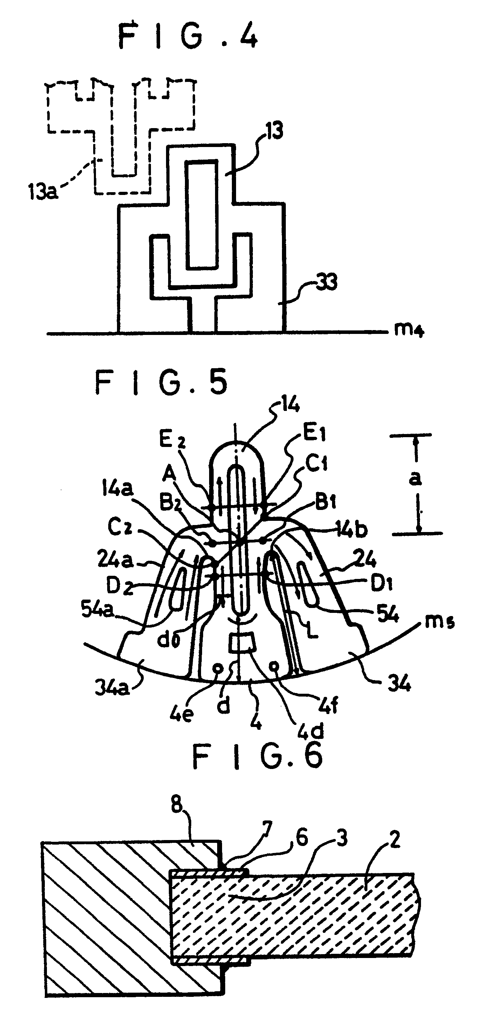

The electrode portions 3, 3a of the ceramic heater are for supplying an electric current to the ceramic heater to allow the heater to generate heat. They are provided, for example, on a single curved line $m_1$ or $m_3$ as shown in Fig.1 or Fig.3, or on a single straight line $m_4$ as shown in Fig.4, and at fore ends of the leg portions 2 and 2a as shown in Fig.1. The electrode portions 3, 3a, in plan view, may be larger than the leg portions 2, 2a and have convexes in the line directions, as shown in Figs.1 and 2. The convexes may be disposed outside as shown in Fig.1 or may be disposed inside as shown at 33 in Fig.4. In the latter case, a larger heat generation area can be ensured when plural ceramic heaters are combined.

In the ceramic heater, the heat generating portion is positioned on one side of the above line and it comprises the closed loop portion 1 and the two leg portion 2 and 2a integrally connected to the closed loop portion 1 at the two connecting portion 1c, 1d, for example as shown in Fig.1.

The closed loop portion 1 may be positioned nearly centrally of the ceramic heater to constitute a main heat generating portion. As to the shape of the closed loop portion, its plane shape, whether long and short diameters are present or not, the ratio of long to short diameter, the width of the closed loop the like are not specially limited. For example, the closed loop portion 1 may be in the shape of a track-like ellipse as shown in Figs.1 and 2, a true circle 12 as shown in Fig.3, or a rectangle 13 as shown in Fig.4.

The two leg portions 21, 21a are integrally connected to the closed loop portion 11 at the two connecting portions. An imaginary line drawn between the connecting portions approximately bisect the closed loop portion 11. The expression "approximately bisect" means that, as shown in Fig.2, in order to ensure a uniform heating porperty, the two connecting points may be $B_1$ and $B_2$, or $C_1$ and $C_2$, which bisect the closed loop portion 11 by a straight line which passes through a center A of the closed loop portion 11 and that the connecting points are within a vertical range corresponding to one third of a long radius "a" from the points $B_1$ and $B_2$, that is, the left-hand connecting point is within the range of between $D_2$ and $E_2$, while the right-hand connecting point is within the range of between $D_1$ and $E_1$. The connecting portions are preferably connected on a short diameter side in the case of a ring having short and long diameters.

The leg portions, which connect the closed loop portion with the two electrode portions, can constitute a sub heat generating portion. They may have about the same width as shown in Fig.1 or may be divergent toward their fore ends and have slits 5, 51a formed in a direction parallel to the extending direction of the leg portions 21, 21a as shown in Fig.2. The number and shape of the slits 5, 51a are not specially limited, but preferably the slits 5, 51a are formed in a direction parallel to the extending direction of the leg portions 21, 21a so that the leg portions 21, 21a are each almost constant in cross sectional area, as shown in Fig.2.

In fixing the heater, usually the electrode portions are fixed to a case. In this structure, however, the electrode connections, which are the weakest portions of the heater, are directly affected by opening and closing motions of the leg portions induced by on-off operations of the heater or engine vibrations. The ceramic heater of the present invention, as shown in Fig.5, can take a structure having a holding projection portion 4 integrally connected to the electrode-side portion of a closed loop portion 14, and it can also take a structure in which the holding projection portion 4 is attached to the case through an insulator. In this ceramic heater, the greater part of an electric current which flows toward a lower part of the closed loop portion 14 flows along the inner peripheral portion of the ring and does not flow so much to the holding projection portion 4, and therefore heat is not so much generated at the holding projection portion 4.

In this ceramic heater, moreover, the holding projection portion 4 undergoes expansion and contraction in the direction of a central axis with on-off operations of the heater, so stress concentration on the holding projection portion 4 is scarcely induced thereby. Thus in the ceramic heater, by providing the heater with such a holding projection portion 4 to change the heater holding position, it is made possible to prevent stress concentration on the electrode connections.

The holding projection portion 4 is for holding the ceramic heater, so it may be of any structure if only the ceramic heater is held thereby.

It is preferable that the width (e.g. "d" in Fig.5) in a direction perpendicular to the current flowing direction of the holding projection portion 4 be not less than twice the width ($d_o$) in a direction perpendicular to the current flowing direction of the closed loop portion 14.

Moreover, the holding projection portion 4 preferably has a hole 4d formed on the side closer to the heating element for the prevention of flowing-in of current and for the prevention of heat conduction from the heat generating portion. In this case, it is possible to suppress further the heat generation of the holding projection portion 4, as shown in Fig.5. Further, it is preferable that the holding projection portion 4 have tapped holes 4e and 4f for fixing the ceramic heater as shown in Fig.5 for example.

In this ceramic heater, a triangle is formed by the closed loop portion 14 and the two electrode portion 34, 34a. This makes a cantilevered state of the ceramic heater possible and also makes it possible to combine a plurality of the ceramic heaters to enlarge the heater surface area.

As an entire shape, the ceramic heater may take various triangular shapes. For example, as shown in Figs.1 and 2, the ceramic heater is preferably in the shape of an isosceles triangle whose base is a line joining the electrode portions 3, 3a or 31, 31a. This is because where a plurality of ceramic heaters are combined in a circular shape, the entire area of the circle can be covered equally. Plural ceramic heaters may be combined in such a fashion as shown in Fig.4 in which each ceramic heater is of a square or rectangular shape having a projecting top part and a plurality of such ceramic heaters 13, 13a are combined in a parallel direction oppositely to each other.

The electrode portions may each include a metallized layer 6 integrally formed on the surface of a fore end of each leg portion. The material of the metallized layer 6 is not specially limited; it may be a material usually employed. Preferably, the metallized layer 6 is so formed as to cover almost the entire surface of each electrode portion. Further, on the surface side of the metallized layer 6 there may be disposed a metal electrode 8 as shown in Fig.6. The metal electrode 8 may be of a shape which presses an end portion of the ceramic heater as shown in Fig.6, or it may be an electrode plate with a lead wire bonded thereto.

There may be formed a solder material layer 7 to bond the metallized layer 6 and the metal electrode 8 together as shown in Fig.6. Although the material of the solder material layer 7 is not specially limited, there usually is employed copper or the like having heat resistance.

The ceramic heater can be fabricated by mixing a powder of a conductive ceramic (e.g. titanium nitride) and an insulating material powder (e.g. silicon nitride) which constitutes the heating element, then forming the resulting powdery mixture into a predetermined shape and calcining the thus-shaped ceramic body to obtain a sintered ceramic product as the ceramic heater.

As set forth above, the ceramic heater of the present invention has a closed loop portion as a main heat generating portion and two leg portions integrally connected to the closed loop portion at two connections. Thus there are bent portions 1a, 1b; 11a, 11b; 14c, 14b, the distance (L) from an end of each electrode portion to each bent portion is shorter in the ceramic heater of the invention than the distance (Lo) in the conventional ceramic heater. Consequently, the stress imposed on the bent portions becomes smaller and the stress concentration during heat generation of the heater can be avoided, that is, the heater has an extremely high breaking strength.

Further, that two electrode portions are disposed on a single straight or curved line is very convenient for maintaining a cantilevered condition. Therefore, if a plurality (e.g. six) of these ceramic heaters are combined, for example, as shown in Fig.7, this combination can be utilized efficiently as a heater to regenerate an apparatus for collecting and purifying fine particles contained in the exhaust gas of a diesel engine or the like.

The ceramic heater can be formed as a whole generally in the shape of an isosceles triangle whose base is a line joining the two electrode portions. In this case, the heat generating area of the ceramic heater can be enlarged by disposing a plurality of such heaters on a circumference.

Thus, the ceramic heater facilitates handling of the electrodes, is superior in uniform heating property and permits a larger heat generation area. Besides, it is possible to prevent a stress concentration during heat generation of the heater, that is, the heater has a high breaking strength.

## DETAILED DESCRIPTION OF THE EMBODIMENTS

The following embodiments are given to further illustrate the present invention.

### Embodiment 1

A ceramic heater according to this embodiment is as shown in Fig.2, in which two electrode portions 31 and 31a are provided on a single curved line $m_2$ and a heat generating portion connected to the electrode portions 31 and 31a is positioned on one side of the line $m_2$, the heat generating portion comprises a closed loop portion 11 and two leg portions 21 and 21a integrally connected to the closed loop portion 11 at two connecting portions $B_1$ and $B_2$, an imaginary line drawn therebetween bisects the closed loop portion 11. The closed loop portion 11 is in the shape of a track-like ellipse having a short to long diameter ratio of 2 : 9, and the two connecting portions $B_1$ and $B_2$ are positioned on a line of the short diameter.

The two leg portions 21 and 21a are divergent toward their fore ends and are formed with triangular slits 5 and 51a respectively which are formed in a direction parallel to the extending direction of the leg portions 21, 21a. The ceramic heater as a whole is in the shape of an isosceles triangle having a vertical angle of about 60° and an isosceles length of 70 mm. In this case, the distance (L) from the fore ends of the electrode portions 31 and 31a to base ends of the bent portions 11a and 11b is 30 mm. The ceramic heater comprises 35 wt.% of titanium nitride and 65 wt.% of silicon nitride.

This ceramic heater was fabricated by mixing 35 wt.% of titanium nitride having an average particle size of 1 $\mu$m with 65 wt.% of silicon nitride having an average particle size of 0.8 $\mu$m according to a wet process, drying the resulting mixture in a dryer together with a small amount of polyvinyl alcohol as a binder to obtain a molding powder, then pressing the powder in a heater shape by means of a mold press, followed by calcining in a nitrogen atmosphere at 1,800 °C for 2 hours, and baking a nickel paste to terminal portions of the resulting ceramic heater in a hydrogen atmosphere at 1,200 °C for 1 hour.

Referring now to Fig.8, there is illustrated a ceramic heater as a comparative example, which has a V-shaped leg portion 25 and electrode portions 35 connected to the leg portion 25. The electrode portions 35 are wide and the distance (Lo) from a fore end of each electrode portion 35 to a bent portion 25a is 45 mm. This V-shaped ceramic heater was fabricated in the same way as in the above manufacture of the ceramic heater of the present invention.

The ceramic heater of this embodiment of the invention and the above comparative ceramic heater were compared for strength by pulling the respective two electrode portions outwards. As a result, the former was broken at the bent portion 11a under a load of 12.5 kg, while the latter comparative ceramic heater was broken at the bent portion 25a under a load of 5.5 kg. From these results it is seen that the ceramic heater of this embodiment of the invention is improved in breaking strength as compared with the conventional V-shaped ceramic heater.

In the ceramic heater of this embodiment, moreover, the closed loop portion 11 and the leg portions 21, 21a are about the same in cross sectional area, so this ceramic heater is extremely superior in uniform heating property. Besides, since the electrode portions 31, 31a are disposed on a single straight or curved line, it is easy to attain a cantilevered condition, and the electrode portions 31, 31a superior in strength because of their large width. Additionally, since this ceramic heater as a whole is in the shape of an isosceles triangle having a vertical angle of 60°, the heat generation area can be enlarged by combining six such heaters circularly as shown in Fig.7.

Embodiment 2

A ceramic heater according to this embodiment comprises two electrode portions 34 and 34a, heat generating portions comprising a closed loop portion 14 and two leg portions 24 and 24a connected to those electrode portions 34 and 34a, and a ceramic heater holding projection portion 4 connected to electrode-side portions of the closed loop portion 14. The two electrode portions 34, 34a, the heat generating portions 14, 24 and the holding projection portion 4 are integrally formed.

This ceramic heater is different in the following points (1) and (2) from the ceramic heater of Embodiment 1 and the other points are substantially the same: (1) the ceramic heater of Embodiment 2 has the holding projection portion 4 integrally connected to the electrode-side portion of the closed loop portion 14 and (2) the two electrode portions 34 and 34a and the holding projection portion 4 are provided on a single curved line $m_5$, and the two electrode portions 34 and 34a in plan view are rectilinear on their sides adjacent to the holding projection portion 4.

The holding projection portion 4 is generally square and the width (d) in a direction perpendicular to the current flowing direction thereof is 18 mm, which is about four times as large as the width ($d_o$) in a direction perpendicular to the current flowing direction of the heating element. On the side close to the heating element, the holding projection portion 4 has a hole 4d for the prevention of current flowing-in and for the prevention of heat conduction from the heat generating portion and also has two tapped holes 4e and 4f for fixing the ceramic heater. Insulation treatment is effected by applying a ceramic insulator to the case side by spray coating. The ceramic heater was fixed through bolts.

The material of this ceramic heater and how to manufacture it are the same as in Embodiment 1.

Since this ceramic heater has its holding projection portion 4 connected to the electrode-side portion of the heat generating portion, the electrode portions 34 and 34a can be kept free by fixing the holding projection portion 4 to the case with an insulator held therebetween, whereby it is possible to prevent engine vibrations from being concentrated on the electrode portions 34 and 34a. In this shape, moreover, opening and closing motions of the leg portions 24 and 24a during heat generation and cooling of the heater can be eliminated at the holding projection portion 4, and since expansion and contraction at the holding projection portion 4 occur in an axial direction passing through the fore end, no stress concentration will be induced thereby. Consequently, it is possible to reduce cracking or separation at the electrode portions 34 and 34a of the ceramic heater and hence it is possible to reduce a defective current supply.

The ceramic heater of this embodiment is substantially of the same construction as the ceramic heater of Embodiment 1 except that the holding projection portion 4 is provided in a predetermined position. Therefore, like the ceramic heater of Embodiment 1, the ceramic heater of this embodiment facilitates handling of the electrodes, is superior in uniform heating property, can take a large heat generation area, can prevent stress concentration during heat generation of the heater, and has an extremely high breaking strength.

## Claims

1. A ceramic heater capable of being cantilevered comprising a heat generating portion with two leg portions, two electrode portions (3, 3a; 31, 31a; 34, 34a) being provided at the end portions of said leg portions, whereby said electrode portions are provided on a single straight or curved line ($m_1$; $m_2$; $m_3$; $m_4$; $m_5$) and said heat generating portion is positioned on one side of said single line,
characterized in that
said two leg portions (2, 2a; 21, 21a; 24, 24a) are integrally connected to a closed loop portion (1; 11; 12; 13; 14), wherein an imaginary line drawn between the connecting portions (1c, 1d; $B_1$, $B_2$) of said two leg portions (2, 2a; 21, 21a; 24, 24a) approximately bisects said closed loop portion (1; 11; 12; 13; 14) and wherein the closed loop portion and the two electrode portions conjointly form a triangle.

2. A ceramic heater according to claim 1, wherein said two electrode portions (3, 3a; 31, 31a; 34, 34a) are opposing to each other and wherein said closed loop portion (1; 11; 12; 13; 14) is disposed above the imaginary line connecting said two electrode portions (3, 3a; 31, 31a; 34, 34a).

3. A ceramic heater according to claim 2, wherein said closed loop portion (1; 11; 13; 14) is in the form of a track-like ellipse and said two connecting portions (1c, 1d; $B_1$, $B_2$) are positioned on a short radius line thereof.

4. A ceramic heater according to claim 2, wherein said closed loop portion (12) is in the form of a true circle.

5. A ceramic heater according to claim 2 or 3, wherein said closed loop portion (14) has a holding projection portion (4) integrally connected thereto on the side where said electrode portions (31, 31a) are provided.

6. A ceramic heater according to claim 2, which is as a whole in the form an an isosceles triangle whose base is a line joining said electrode portions (3, 3a; 31, 31a; 34, 34a).

7. A ceramic heater according to claim 3 or 5, wherein said leg portions (21, 21a; 24, 24a) are divergent toward their fore ends and are formed with slits (5, 51a; 54, 54a) in parallel with the extending direction of said leg portions (21, 21a; 24, 24a).

8. A ceramic heater according to one of the claims 5, wherein the width (d) perpendicular to a current flowing direction of said holding projection portion (4) is not less than two times the width ($d_o$) perpendicular to the current flowing direction of said heat generating portion.

9. A ceramic heater according to claim 5 or 8, wherein said holding projection portion (4) has a hole (4d) formed on its side close to said heat generating portion for prevention of flowing-in of an electric current and for the prevention of heat conduction from said heat generating portion.

10. A ceramic heater according to claim 9, wherein said holding projection portion (4) has tapped holes (4e, 4f) for fixing the ceramic heater.

11. A ceramic heater according to claim 2, which is constituted by an electrically conductive ceramic comprising 35 wt.% titanium nitride and 65 wt.% silicon nitride.

12. A ceramic heater according to claim 2, wherein said electrode portions are each constituted by a metallized layer integrally formed on the surface of a fore end of each said leg portion.

## Revendications

1. Elément chauffant en céramique pouvant être monté en porte-à-faux et comprenant une portion génératrice de chaleur avec deux portions de pied, deux portions d'électrode (3,3a ; 31,31a ; 34,34a) étant prévues sur les portions d'extrémité des portions de pied, les portions d'électrode étant montées sur une simple ligne droite ou courbe (m1 ; m2 ; m3 ; m4 ; m5) et la portion génératrice de chaleur étant positionnée sur un côté de cette ligne simple, caractérisé en ce que les deux portions de pied (2, 2a ; 21, 21a ; 24, 24a) sont raccordées solidairement à une portion de boucle fermée (1 ; 11 ; 12 ; 13 ; 14), où une ligne imaginaire tracée entre les portions de liaison (1c, 1d ; b1, b2) des deux portions de pied (2, 2a ; 21, 21a ; 24, 24a) divise approximativement en deux parties égales la portion de bouche fermée (1 ; 11 ; 12 ; 13 ; 14) et où la portion de boucle fermée et les deux portions d'électrode forment conjointement un triangle.

2. Elément chauffant en céramique selon la revendication 1, dans lequel les deux portions d'électrode (3, 3a ; 31, 31a ; 34, 34a) sont en regard l'une de l'autre et dans lequel la portion de bouche fermée (1 ; 11 ; 12 ; 13 ; 14) est disposée au dessus de la ligne imaginaire reliant les deux portions d'électrode (3, 3a ; 31, 31a ; 34, 34a).

3. Elément en céramique selon la revendication 2, dans lequel la portion de boucle fermée (1 ; 11 ; 13 ; 14) se présente comme une ellipse formant une voie et les deux portions de liaison (1c, 1d ; b1, b2) sont positionnées sur la courte ligne de rayon.

4. Elément chauffant en céramique selon la revendication 2, dans lequel la portion de boucle fermée (12) a la forme d'un vrai cercle.

5. Elément chauffant en céramique selon la revendication 2 ou 3, dans lequel la portion de boucle fermée (14) comporte une portion de maintien faisant saillie (4) reliée solidairement à celle-ci sur le côté où sont montées les portions d'électrode (31, 31a).

6. Elément chauffant en céramique selon la revendication 2, lequel dans l'ensemble se présente sous la forme d'un triangle isocèle dont la base est une ligne reliant les portions d'électrode (3, 3a ; 31, 31a ; 34, 34a).

7. Elément chauffant en céramique selon la revendication 3 ou 5, dans lequel les portions de pied (21, 21a ; 24, 24a) sont divergentes en direction de leurs extrémités antérieures et comportent des fentes (5, 51a ; 54, 54a) parallèles à la direction de prolongement de ces portions de pied (21, 21a ; 24, 24a).

8. Elément chauffant en céramique selon la revendication 5, dans lequel la largeur (d) perpendiculaire à une direction de passage de courant de la portion de maintien en saillie (4) n'est pas inférieure à deux fois la largeur (d$_o$) perpendiculaire à la direction de passage de courant de la portion génératrice de chaleur.

9. Elément chauffant en céramique selon la revendication 5 ou 8, dans lequel la portion de maintien faisant saillie (4) comporte un trou (4d) pratiqué sur son côté à proximité de la portion génératrice de chaleur pour empêcher l'arrivée d'un courant électrique et pour empêcher la conduction thermique à partir de cette portion génératrice de chaleur.

10. Elément chauffant en céramique selon la revendication 9, dans lequel la portion de maintien faisant saillie (4) comporte des trous taraudés (4e, 4f) destinés à fixer l'élément chauffant en céramique.

11. Elément chauffant en céramique selon la revendication 2, constitué par une céramique conductrice électriquement comprenant 35 % en poids de nitrure de titane et 65 % en poids de nitrure de silicium.

12. Elément chauffant en céramique selon la revendication 2, dans lequel les portions d'électrodes sont chacune constituées par une couche métallisée formée solidairement sur la surface d'une extrémité antérieure de chaque portion de pied.

**Patentansprüche**

1. Keramisches Heizelement, das imstande ist, einseitig eingespannt zu werden, und ein hitzeerzeugendes Teil mit zwei Schenkelstücken sowie zwei an den Endabschnitten dieser Schenkelstücke vorhandene Elektrodenstücke (3, 3a; 31, 31a; 34, 34a) umfaßt, wobei die genannten Elektrodenstücke auf einer einzelnen geraden oder gekrümmten Linie (m$_1$; m$_2$; m$_3$; m$_4$; m$_5$) vorgesehen sind und das besagte hitzeerzeugende Teil auf der einen Seite der erwähnten einzigen Linie angeordnet ist, dadurch gekennzeichnet, daß die genannten zwei Schenkelstücke (2, 2a; 21, 21a; 24, 24a) einstückig mit einem geschlossenen Schleifenteil (1; 11; 12; 13; 14) verbunden sind, wobei eine imaginäre, zwischen den Verbindungsstellen (1c, 1d; $B_1$ , $B_2$) der genannten zwei Schenkelstücke (2, 2a; 21, 21a; 24, 24a) gezogene Linie annähernd das erwähnte geschlossene Schleifenteil (1; 11; 12; 13; 14) halbiert und wobei das geschlossene Schleifenteil sowie die beiden Elektrodenstükke gemeinsam ein Dreieck bilden.

2.  Keramisches Heizelement nach Anspruch 1, in welchem die genannten zwei Elektrodenstücke (3, 3a; 31, 31a; 34, 34a) einander gegenüberliegen und in welchem das erwähnte geschlossene Schleifenteil (1; 11; 12; 13; 14) oberhalb der imaginären, die genannten zwei Elektrodenstücke (3, 3a; 31, 31a; 34, 34a) verbindenden Linie angeordnet ist.

3.  Keramisches Heizelement nach Anspruch 2, in welchem das erwähnte geschlossene Schleifenteil (1; 11; 13; 14) in Gestalt einer laufbahnartigen Ellipse vorhanden ist und die besagten zwei Verbindungsstellen (1c, 1d; $B_1$, $B_2$) an einer kurzen Radiuslinie von dieser angeordnet sind.

4.  Keramisches Heizelement nach Anspruch 2, in welchem das erwähnte geschlossene Schleifenteil (12) in Gestalt eines wahren Kreises vorhanden ist.

5.  Keramisches Heizelement nach Anspruch 2 oder 3, in welchem das erwähnte geschlossene Schleifenteil (14) ein mit diesem an der Seite, auf welcher die genannten Elektrodenstücke (31, 31a) vorgesehen sind, einstückig verbundenes vorspringendes Halteteil (4) besitzt.

6.  Keramisches Heizelement nach Anspruch 2, das als Ganzes die Gestalt eines gleichschenkligen Dreiecks hat, dessen Grundlinie eine die genannten Elektrodenstücke (3, 3a; 31, 31a; 34, 34a) verbindende Linie ist.

7.  Keramisches Heizelement nach Anspruch 3 oder 5, in welchem die genannten Schenkelstücke (21, 21a; 24, 24a) zu ihren vorderen Enden hin divergierend und mit zu der Erstreckungsrichtung der genannten Schenkelstücke (21, 21a; 24, 24a) parallelen Schlitzen (5, 51a; 54, 54a) ausgebildet sind.

8.  Keramisches Heizelement nach Anspruch 5, in welchem die zu einer Stromflußrichtung des erwähnten vorspringenden Halteteils (4) rechtwinklige Breite (d) nicht geringer ist als die zweimalige Breite ($d_o$) rechtwinklig zur Stromflußrichtung des genannten hitzeerzeugenden Teils.

9.  Keramisches Heizelement nach Anspruch 5 oder 8, in welchem das erwähnte vorspringende Halteteil (4) ein an seiner zu dem genannten hitzeerzeugenden Teil nahen Seite ausgebildetes Loch (4d) zur Verhinderung eines Einfließens eines elektrischen Stroms und zur Verhinderung einer Wärmeleitung von dem genannten hitzeerzeugenden Teil besitzt.

10. Keramisches Heizelement nach Anspruch 9, in welchem das erwähnte vorspringende Halteteil (4) Innengewindebohrungen (4e, 4f) zur Befestigung des keramischen Heizelements besitzt.

11. Keramisches Heizelement nach Anspruch 2, das aus einer elektrisch leitfähigen Keramik, die 35 Gew.-% an Titannitrid und 65 Gew.-% an Siliziumnitrid umfaßt, gebildet ist.

12. Keramisches Heizelement nach Anspruch 2, in welchem die genannten Elektrodenstücke aus jeweils einer metallisierten, einstückig auf der Fläche des vorderen Endes eines jeden der erwähnten Schenkelstücke ausgebildeten Schicht gefertigt sind.

# F I G . 1

# F I G . 2

# F I G . 3

# FIG.4

# FIG.5

# FIG.6

# FIG.7

# FIG.8 (Prior Art)